# EUROPEAN PATENT APPLICATION

(11) **EP 0 859 307 A1**
(43) Date of publication of application: **19.08.1998**
(21) Application number: 98300284.1
(22) Date of filing: 15.01.1998
(51) Int. Cl.: G06F 3/023

(54) **Control mechanism for graphical user interface**

(30) Priority: 18.02.1997 US 801655
(71) Applicant: International Business Machines Corporation, Armonk, N.Y. 10504 (US)
(72) Inventor: Berstis, Viktors, Austin, Texas 78746 (US)
(74) Representative: Litherland, David Peter

(57) **Abstract**

As shown a set of actions associated with an object in a user interface of a computer by transformation of the cursor. This is accomplished without entering any special help mode, selection of the object, or any other action by the user other than simple movement of the cursor in the interface. The cursor is presented in a first manner over portions of the interface which are not associated with any actions. With movement of the cursor, the system determines that the cursor has been moved over an object in the user interface. Next, the system determines that the object has an associated set of actions. The system then presents the cursor in a second manner to list the associated set of actions without further user input. Preferably, the cursor includes a list of actions together with an indication how to activate each action of the associated set of actions.

## Description

The present invention relates generally to data processing systems. More particularly, it relates to a control mechanism for a graphical user interface.

It has long been an objective of the designers of computer systems to make their systems more accessible, or "user friendly", to a diverse group of users. Heretofore, this group of users possessed a sufficient desire or need to learn and adapt their behavior to a user interface.

While the Internet as a cultural phenomenon has raised the awareness to the tremendous information available to computer users, the largest segment of the public has yet to team how to access these resources. Such consumers are either unmotivated, unable or too fearful to acquire the needed skills to access the Internet by conventional computer interfaces. Also, the cost of a conventional system is too high a hurdle for many. The need for low cost data processing systems which are simple to operate is being addressed to some extent by "WebTV" and similar systems. These systems are collectively known as Internet appliances.

The intended audience of the Internet appliance is such that it is expected that prior techniques for using computer interfaces would be unacceptable. Many of these consumers do not like the idea of owning a computer. The goal is to make interface as intuitive and nontechnical as possible. Preferably, the user is unaware that the interface is presented by a computer at all.

One of the problems associated with a normal user interface is that user may be unaware of the options available to him if certain portions of the interface are activated. This problem is traditionally dealt with by help programs or documentation online which must be manually called by the user. However, the novice user is fearful of pressing buttons and activating such features because it may send a computer into an unknown and possibly unrecoverable state. Therefore, the challenge is to inform the user of the possibilities within the interface and how to take advantage of those options, yet without requiring the user to enter any sort of help state or mode.

The present invention described below describes one solution to this problem, by providing an intuitive means of informing the user as to the options available in a user interface.

As will be described below, the user is informed without requiring entry into particular state or activation of any input device.

According to one aspect of the invention therefore, there is provided a method for presenting a set of actions associated with an object in a user interface of a computer, comprising the steps of: presenting a cursor in a first manner; determining that the cursor has been moved over an object in the user interface; determining that the object has an associated set of actions; presenting the cursor in a second manner to list the associated set of actions without further user input.

As described below in relation to the preferred embodiment, the invention presents a set of actions associated with an object in a user interface of a computer by transformation of the cursor without entering any special help mode, selection of the object, or any other action by the user other than simple movement of the cursor in the interface. The cursor is presented in a first manner over portions of the interface which are not associated with any actions. With movement of the cursor, the system determines that the cursor has been moved over an object in the user interface. Next, the system determines that the object has an associated set of actions. The system then presents the cursor in a second manner to list the associated set of actions without further user input. In the preferred embodiment, the cursor will include a list of actions together with an indication how to activate each action of the associated set of actions.

A preferred embodiment of the present invention will now be described, by way of example only, with reference to the accompanying drawings in which:

FIGs. 1A-1D depict various pictorial representations of a data processing system in which the present invention may be implemented.

FIG. 2 is an architectural block diagram for the major components for a data processing unit designed according to one embodiment of the present invention.

FIG. 3A, 3B and 3C are pictorial representations of menu cursors.

FIG. 4 depicts the menu cursor as it moves in an interface.

FIG. 5 is a flow diagram of the process used in displaying the menu cursor in the user interface.

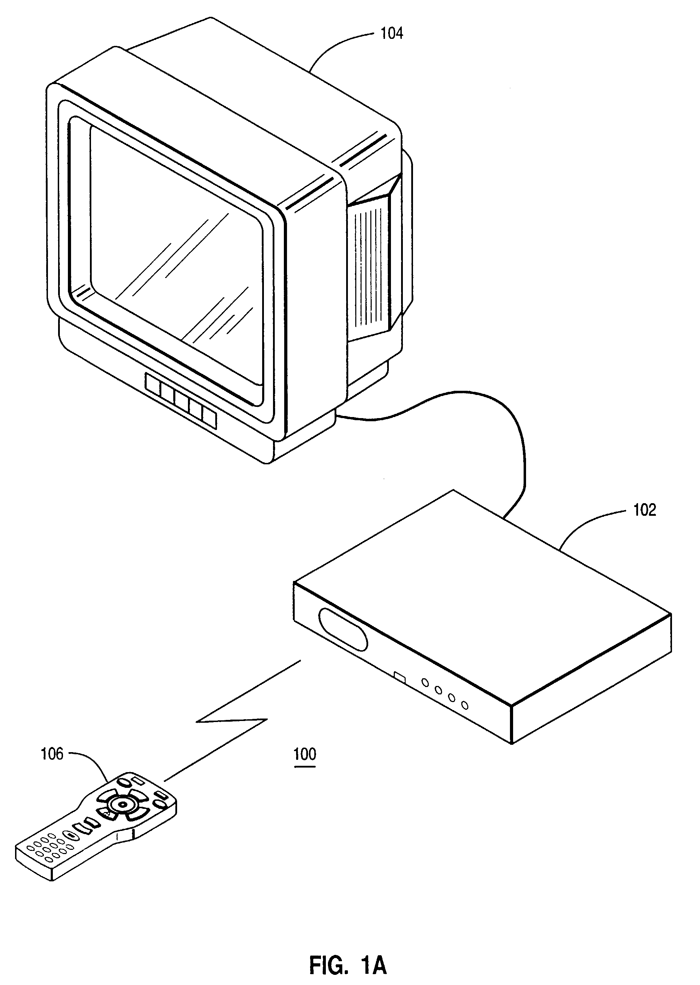

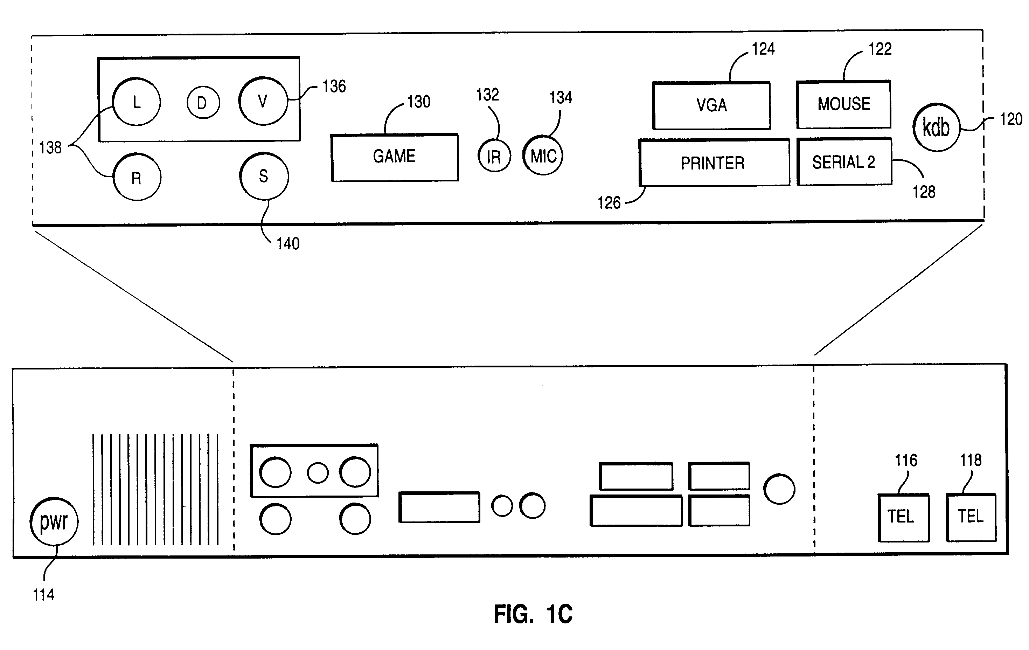

With reference now to the figures and in particular with reference to FIGs. 1A through 1D, various pictorial representations of a data processing system in which a preferred embodiment of the present invention may be implemented are depicted. FIG. 1A is a pictorial representation of the data processing system as a whole. The data processing system 100 in the depicted example is an Internet appliance, providing, with minimal economic cost in hardware to the user, access to the Internet. The data processing system 100 includes a data processing unit 102. The data processing unit 102 is preferably sized to fit in typical entertainment centers and provides all required functionality which is conventionally found in personal computers to enable a user to "browse" the Internet. In addition, the data processing unit 102 may provide other common functions such as serving as an answering machine or receiving facsimile transmissions.

The data processing unit 102 is connected to the television 104 for display of graphical information. The television 104 may be any suitable television, although color televisions with an S-Video input will provide better presentations of the graphical information. The data processing unit 102 may be connected to television 104 through a standard coaxial cable connection. A remote control unit 106 allows a user to interact with and control data processing unit 102. The remote control unit 106 emits infrared (JR) signals, preferably with a different bar code pattern than the normal television, stereo, and VCR. The remote control unit 106 provides the functionality of a pointing device in conventional personal computers, including the ability to move a cursor on a display and select items.

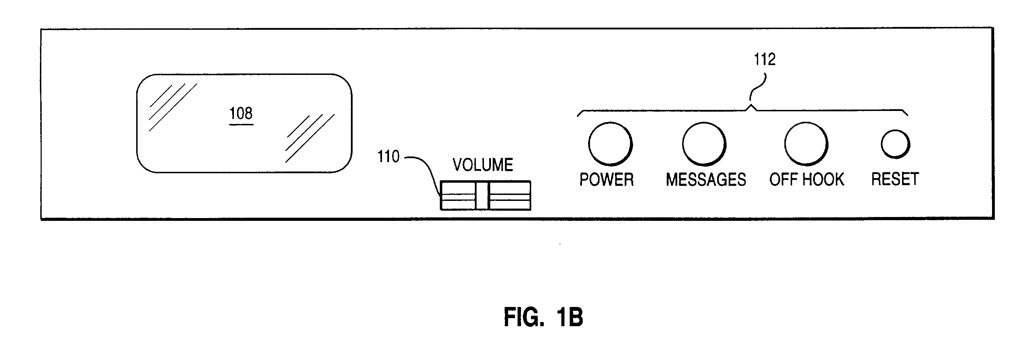

FIG. 1B is a pictorial representation of the front panel of data processing unit 102 according to a preferred embodiment of the present invention. The front panel includes an infrared window 108 for receiving signals from the remote control unit 106 and for transmitting infrared signals. The data processing unit 102 may transmit infrared signals to be reflected off∼ objects or surfaces, allowing data processing unit 102 to automatically control the television 104 and other infrared remote controlled devices. The volume control 110 permits adjustment of the sound level emanating from a speaker within the data processing unit 102. A plurality of light-emitting diode (LED) indicators 112 provide an indication to the user of when data processing unit 102 is on, whether the user has messages, whether the modem/phone line is in use, or whether data processing unit 102 requires service.

FIG. 1C is a pictorial representation of the rear panel of the data processing unit 102 in a preferred embodiment of the present invention. A three wire (ground included) insulated power cord 114 passes through the rear panel. Standard telephone jacks 116 and 118 on the rear panel provide an input to a modem from the phone line and an output to a handset (not shown). The rear panel also provides a standard computer keyboard connection 120, mouse port 122, computer monitor port 124, printer port 126, and an additional serial port 128. These connections may be employed to allow the data processing unit 102 to operate in the manner of a conventional personal computer. The game port 130 on the rear panel provides a connection for a joystick or other gaming control device (glove, etc.). The infrared extension jack 132 allows a cabled infrared LED to be utilized to transmit infrared signals. The microphone jack 134 allows an external microphone to be connected to the data processing unit 102.

The video connection 136, a standard coaxial cable connector, connects to the video-in terminal of the television 104 or a video cassette recorder (not shown). Left and right audio jacks 138 connect to the corresponding audio-in connectors on the television 104 or to a stereo (not shown). If the user has S-Video input, then S-Video connection 140 may be used to connect to the television 104 to provide a better picture than the composite signal. If the television 104 has no video inputs, an external channel 3/4 modulator (not shown) may be connected in-line with the antenna connection.

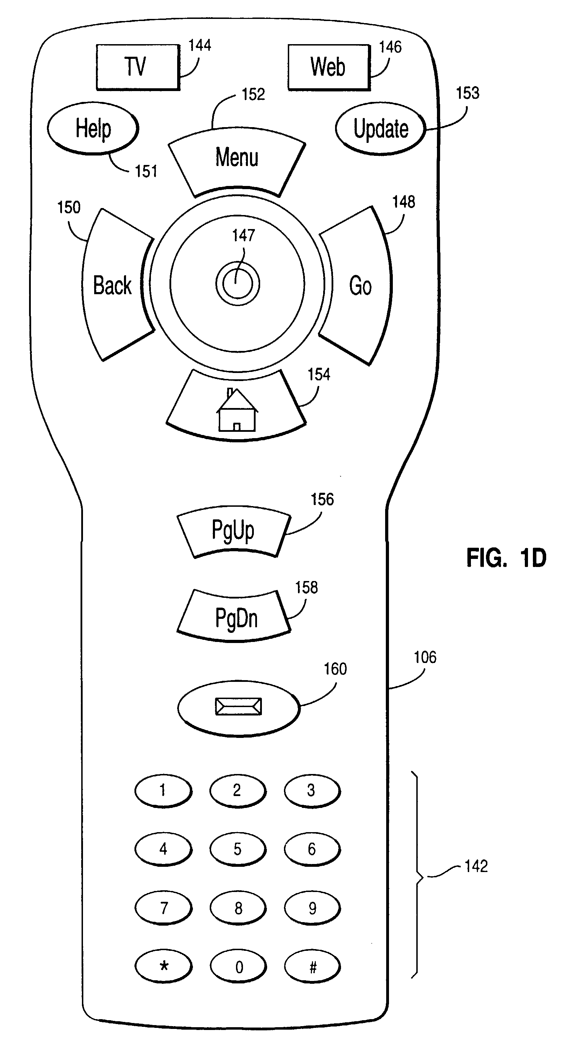

FIG. 1D is a pictorial representation of the remote control unit 106 according to a preferred embodiment of the present invention. Similar to a standard telephone keypad, the remote control unit 106 includes buttons 142 for arabic numerals 0 through 9, the asterisk or "star" symbol (*), and the pound sign (#). The remote control unit also includes a "TV" button 144 for selectively viewing television broadcasts and a "Web" button 146 for initiating "browsing" of the Internet. Pressing the "Web" button 146 will cause the data processing unit 102 to initiate modem dial-up of the user's Internet service provider and display the start-up screen for an Internet browser.

A pointing device 147, which is preferably a trackpoint or "button" pointing device, is included on the remote control unit 106 and allows a user to manipulate a cursor on the display of the television 104. The "Go" and "Back" buttons 148 and 150, respectively allow a user to select an option or return to a previous selection. In particular in the Internet context, the "GO" button 48 refers to traversing a link, i.e. going to the page, over which the cursor is located. The "Back" button 150 returns the user to the page just previously visited. The "Help" button 151 causes context-sensitive help to be displayed or otherwise provided. A "Menu" button 152 causes a context-sensitive menu of options to be displayed, and an "Update" button 153 will update the options displayed based on the user's input, while the "Home" button 154 allows to user to return to a default display of options. "PgUp" and The "PgDn" buttons 156 and 158 allows the user to change the content of the display in display-sized blocks rather than by scrolling. The "Message" button 160 allows the user to retrieve messages.

In addition to, or in lieu of, the remote control unit 106, an infrared keyboard (not shown) with an integral pointing device may be used to control data processing unit 102. The integral pointing device is preferably a trackpoint or button type of pointing device. A wired keyboard (also not shown) may also be used through keyboard connection 120, and a wired pointing device such as a mouse or trackball may be used through the mouse port 122. When a user has one or more of the remote control unit 106, the infrared keyboard, the wired keyboard and/or wired pointing device operable, the active device locks out all others until a prescribed period of inactivity has passed.

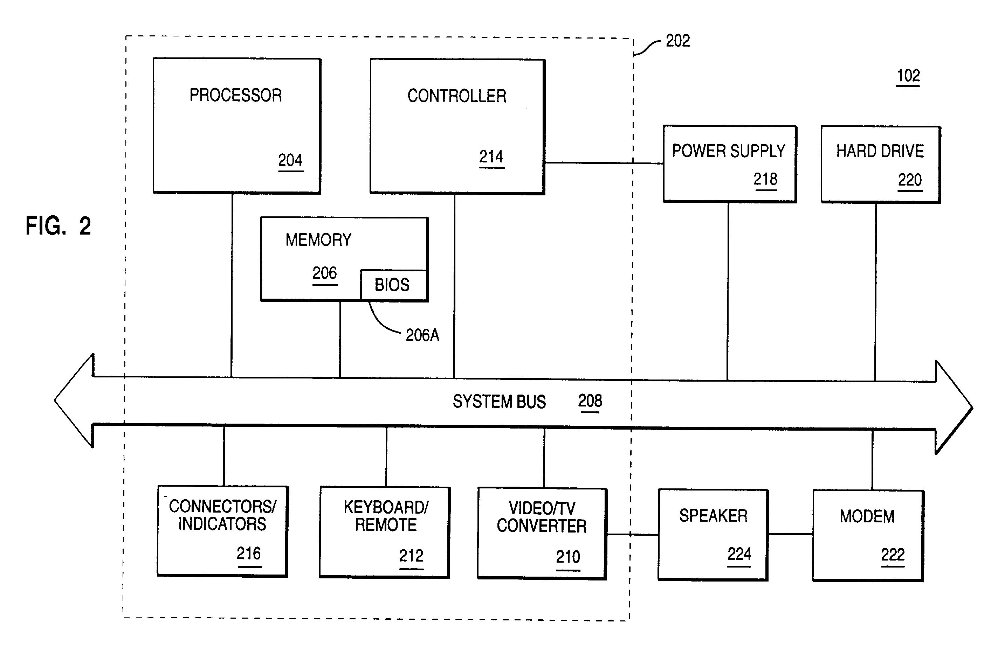

Referring now to FIG. 2, a block diagram for the major components of data processing unit 102 in a preferred embodiment of the present invention is portrayed. As with conventional personal computers, data processing unit 102 includes a motherboard 202 containing a processor 204 and memory 206 connected to system bus 208. The processor 204 is preferably at least a 486 class processor operating at or above 100 MHz. Memory 206 may include cache memory and/or video RAM. The processor 204, the memory 206, and the system bus 208 operate in the same manner as corresponding components in a conventional data processing system.

The video/TV converter 210, located on the motherboard 202 and connected to the system bus 208, generates computer video signals for computer monitors, a composite television signal, and an S-Video signal. The functionality of video/TV converter 210 may be achieved through a Trident TVG9685 video chip in conjunction with an Analog Devices AD722 converter chip. The video/TV converter 210 may require loading of special operating system device drivers.

The keyboard/remote control interface unit 212 on the motherboard 202 receives keyboard codes through the controller 214, regardless of whether a wired keyboard/pointing device or an infrared keyboard/remote control is being employed. The infrared remote control unit 106 transmits signals which are ultimately sent to the serial port as control signals generated by conventional mouse or pointing device movements. Two buttons on the remote control unit 106 are interpreted identically to the two buttons on a conventional mouse, while the remainder of the buttons transmit signals corresponding to keystrokes on an infrared keyboard. Thus, the remote control unit 106 has a subset of the functions provided by an infrared keyboard.

Connectors/indicators 216 on the motherboard 202 provide some of the connections and indicators on data processing unit 102 described above. Other connections are associated with and found on other components. For example, telephone jacks 116 and 118 are located on the modem 222. The power indicator within connectors/indicators 216 is controlled by the controller 214.

External to the motherboard 202 in the depicted example are the power supply 218, the hard drive 220, the modem 222, and the speaker 224. The power supply 218 is a conventional power supply except that it receives a control signal from the controller 214 which effects shut down of all power to the motherboard 202, the hard drive 220, and the modem 222. In some recovery situations, removing power and rebooting is the only guaranteed method of resetting all of these devices to a known state. Thus, the power supply 218, in response to a signal from the controller 214, is capable of powering down and restarting the data processing unit 102.

The hard drive 220 contains operating system and applications software for data processing unit 102, which preferably includes: IBM DOS 7.0, a product of International Business Machines Corporation in Armonk, New York; Windows 3.1, a product of Microsoft Corporation in Redmond, Washington; and Netscape Navigator, a product of Netscape Communications Corporation in Mountain View, California. Minor modifications of these software packages may be desirable to optimize performance of data processing unit 102. Hard drive 220 may also store data, such as list of favorite Internet sites or unviewed downloads from an Internet site. One of the preferred implementations of the invention is as sets of instructions resident in the random access memory of the computer system configured generally as described above. Until required by the computer system, the set of instructions may be stored in another computer memory, for example, in the hard disk 220. Although an Internet appliance will not generally use removable memory to minimize cost, the invention does have application to other general purpose computer systems in which removable memory is used. The sets of instructions may be stored in a removable memory such as an optical disk for eventual use in a CD-ROM drive or a floppy disk for eventual use in a floppy disk drive. The program may also be stored in the memory of another computer system to be sent over the network such as an external network as the Internet when desired. For example, the operating system of the Internet appliance can be updated remotely.

The modem 222 may be any suitable modem used in conventional data processing systems, but is preferably a 33.6 kbps modem supporting the V.42bis, V34bis, V.34, V.17 Fax, MNP 1-5, and AT command sets. To maintain the slim height of the data processing system 102, the modem 222 is preferably inserted into a slot mounted sideways on the motherboard 202.

The controller 214 is preferably one or more of the 805x family controllers. The controller 214 receives and processes input from the infrared remote control 106, The infrared keyboard, the wired keyboard, or the wired mouse. When one keyboard or pointing device is used, all others are locked out (ignored) until none have been active for a prescribed period. Then the first keyboard or pointing device to generate activity locks out all others. The controller 214 also directly controls all LED indicators except that indicating modem use. As part of the failure recovery system, the controller 214 specifies the boot sector selection during any power off-on cycle.

Those skilled in the art will recognize that the components depicted in FIGs. 1A- 1D and 2 and described above may be varied for specific applications or embodiments. Such variations in which the present invention may be implemented are considered to be within the scope of the present invention.

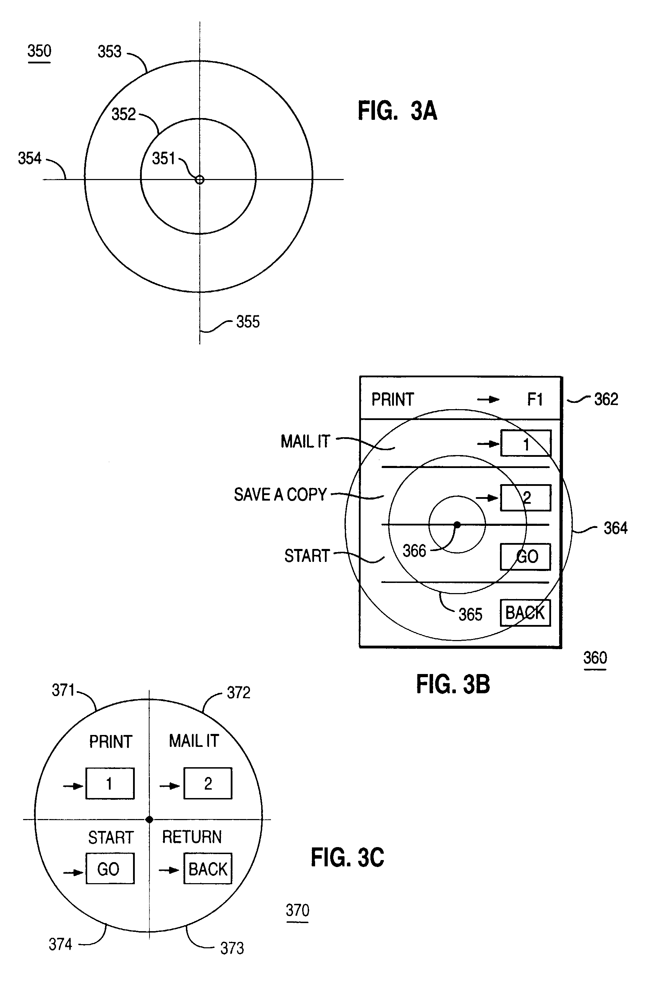

FIGS. 3A, 3B and 3C show possible embodiments of the cursor or pointer icon presented in the interface in a normal manner and a presentation over an object having actions which might be performed by the user. In FIG. 3A, the "normal" presentation of the cursor 350 is shown. While the pointer icon might be displayed conventionally as an arrow in a computer interface, the animated crosshair cursor is more intuitive. It is easier for a novice user to readily appreciate a location of the hot spot 351, the concentric circles 352, 353 and crosshairs 354, 355 guide the eye to the hot spot 351 of the cursor. Animation to the circles, crosshairs and hot spot can be added to the cursor to guide the user's eye to the center of the cursor. The cursor has the so called normal appearance when it is in an ordinary position in the interface where no actions can be activated by the user.

As shown in FIG. 3B, when the cursor 360 is moved over an object in the interface upon which actions can be performed, the cursor changes into a menu cursor 360 which shows the actions available to the user at this point in the interface. Unlike the prior art, no action, other than moving the cursor, need be taken by the user. Thus, the user does not need to worry about entering some undesirable state from which he can not recover. In the prior art help interface, entry into some special help mode, or a selection of an object must be accomplished before the user is presented with the information. Also, in the prior art, it is usually a separate panel apart from the cursor which appears rather than a transformation of the cursor itself.

As shown in FIG. 3B, the menu 362 has a series of items listed with arrows pointing to numerals indicating a button on the remote or the keyboard which may be activated or pressed to perform the selected actions.∼ Note that the cursor changes automatically to the menu presentation upon movement of the cursor over an object of the interface. No action by the user such as activation of the help mode or clicking a special sequence of buttons on a pointing device or other action is required. The presentation of the key to activate is preferably realistic as possible to the actual key on the remote control or keyboard.

As shown in the figure, the concentric circles 364, 365 may be retained as part of the pointer icon, perhaps in a semitransparent state over the menu, to remind the user that this new presentation is still the pointer icon. The location of the hot spot 366 of the cursor is also retained. Furthermore, the menu itself may be in a semitransparent state so that the object over which the cursor is located may be viewed through the cursor. However, given the limitations of standard televisions, that is likely not to be the preferred embodiment.

In FIG. 3C, another embodiment of the menu icon 370 is presented. In this example, each quadrant 371, 372, 373, 374 of the crosshairs is replaced by an action and an indication of which keys which will activate those actions. As in FIG. 3B, the presentation of the keys is as realistic as possible to the actual keys on the data processing system. This embodiment is less flexible to that shown in FIG. 3B in that it is limited to a certain number of selections, however, it does show that alternatives exist to the presentation of the menu.

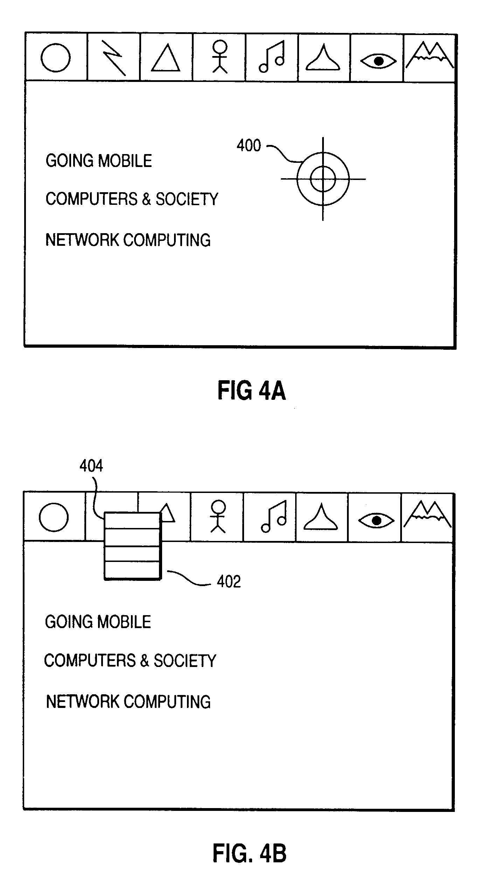

FIGS. 4A and 4B depict the cursor in the interface as it moves from a position where no action can be taken (FIG. 4A) to an object having certain number of actions associated with it (FIG. 4B). In FIG. 4A, the cursor 400 is over a blank space in the interface and is presented in its normal manner, the crosshairs as shown in FIG. 6A. AS shown in FIG. 4B, the user has moved the cursor 402 over an object 404 associated with a number of possible actions available to the user. The cursor 402 automatically changes to the menu presentation, i.e. without selection of a help mode by the user, thus showing the possible actions which may be taken. These are typically activated by keys on the remote control or keyboard.

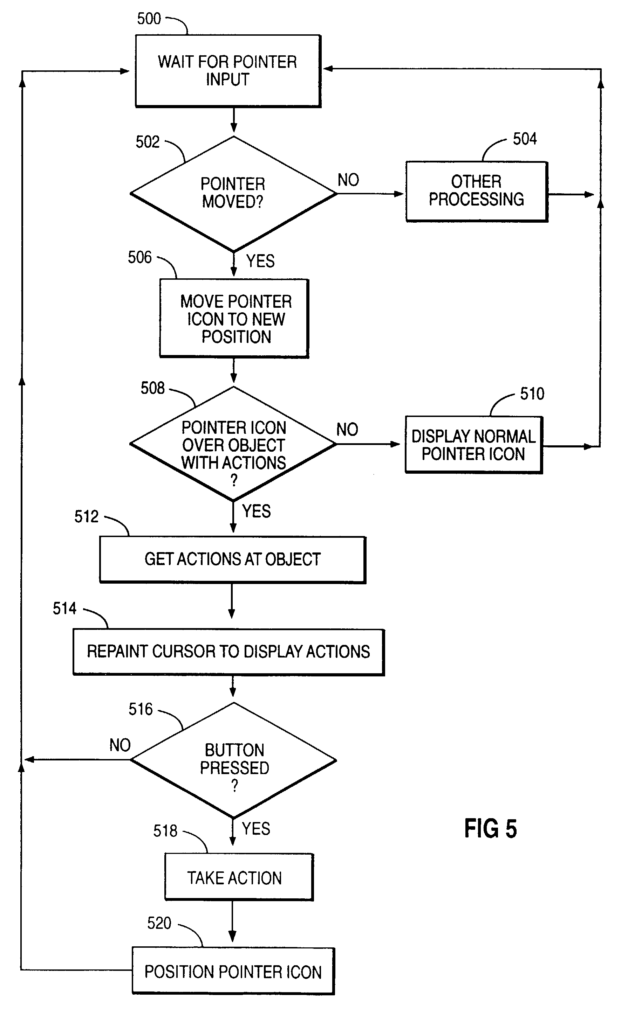

FIG. 5 is a flow diagram where the menu cursor process is shown. As shown in FIG. 5, the process begins as the system waits for pointer input, step 500. In step 502, the system determines whether the pointer has been moved. If not, in step 504, other processing takes place in the system and it returns to wait for pointer input, step 500. In step 502, the system determines whether the pointer has been moved. If not, in step 504, other processing takes place in the system and it returns to wait for pointer input in step 500. If the pointer has been moved, in step 506, the pointer icon is moved to a new position indicated by the user. In step 508, a test determines whether the pointer icon is over an object with options. The operating system keeps track of each object's locations and attributes in the interface, including the pointer icon. The preferred embodiment of the invention is a modification of the operating system itself. However, the process could be implemented as an application which queries the operating system and repaints the pointer icon as needed. While less preferred, a separate application may be the only option available to those without access to the source code of the operating system.

If the pointer icon is not over an object, with an action, the normal pointer is presented in step 510. If, however, the pointer icon is over an object with actions, the actions available at the object are received in step 512. Again, these actions are normally kept in data structures associated with an object by the operating system. If a separate process is used to paint the cursor, calls can be made to the operating system to retrieve this information. In step 514, the cursor is repainted to display actions available at the object. In step 516, the system determines whether a button is pressed corresponding to one of the actions. Thereafter, in step 518, the appropriate action is taken after the action is taken by the system. If the action involves the presentation of new screens, the pointer icon is repositioned within the user interface in step 520. Depending on the position of the pointer icon and the objects in the interface, the icon is displayed in the normal manner or in the menu manner.

While the invention has been shown and described with reference to particular embodiments thereof, it will be understood by those skilled in the art that the foregoing and other changes in form and detail may be made therein without departing from the scope of the invention. For example, the menu presentation may not be invoked at pull down menus where the pull down menus themselves invoke other means. Only at the final menu where actions are actually taken does the cursor actually transform into the menu presentation.

## Claims

1. A method for presenting a set of actions associated with an object in a user interface of a computer, comprising the steps of:
presenting a cursor in a first manner;
determining that the cursor has been moved over an object in the user interface;
determining that the object has an associated set of actions;
presenting the cursor in a second manner to list the associated set of actions without further user input.

2. A method as claimed in claim 1 wherein the cursor when presented in the second manner includes an indication how to activate each action of the associated set of actions.

3. A method as claimed in claim 2 wherein the indication comprises a depiction of a key on an input device which when depressed will activate an action.

4. A method as claimed in any preceding claim wherein some elements of the cursor when presented in the first and second manners are common so that a user can understand the identity of the cursor.

5. A method as claimed in claim 4 wherein at least some of the elements of the cursor are presented in a semitransparent manner

6. A system including processor and memory for presenting actions in a user interface comprising:
means for moving a cursor through the user interface;
means for detecting the presence of an object at a current cursor position;
means for retrieving actions associated with an object at the current position; and
means for changing the presentation of the cursor to display the associated actions in the cursor.

7. A system as claimed in claim 6 further comprising a remote control for sending cursor movement input to a base unit coupled to a display.

8. A system as claimed in claim 7 wherein the presentation of the cursor lists the associated actions in menu form and further lists a key on the remote control to activate each action.

9. A computer program product on a computer readable medium for presenting actions in a user interface comprising:
program code means for moving a cursor through the user interface;
program code means for detecting the presence of an object at a current cursor position;
program code means for retrieving actions associated with an object at the current position; and
program code means for changing the presentation of the cursor to display the associated actions in the cursor.
